# EUROPEAN PATENT APPLICATION

(11) **EP 1 626 598 A1**
(43) Date of publication of application: **15.02.2006**
(21) Application number: 04291562.9
(22) Date of filing: 21.06.2004
(51) Int. Cl.: H04Q 7/38, H04L 9/32, H04L 9/08

(54) **Method for securing an authentication and key agreement protocol**

(71) Applicant: Axalto SA, 92120 Montrouge (FR)
(72) Inventor: Abellan Sevilla, Jorge AXALTO, 78431 Louveciennes Cedex (FR); Salgado,Stéphanie AXALTO, 78431 Louveciennes Cedex (FR)
(74) Representative: Renault, Patricia Marie Jacqueline

(57) **Abstract**

The present invention concerns a method for securing an authentication and key agreement (AKA) procedure used in a third-generation mobile system, comprising the following steps:
a. Sending the standard Authentication Vectors (AV) from the Secure Server (SS) to an Authentication Server (AS);
b. Modifying in the Authentication Server (AS) the MAC and/or any other parameter not used as input of the computation of cryptographic key material, sent by the Secure Server (SE) to the AS (Authentication Server);
c. Sending from the Authentication Server (AS) to the Secure Element (SE), through a mobile client said modified data;
d. Detecting, in the Secure Element (SE) the modification of the said data;
e. Sending, in the Secure Element (SE) the standard AKA output except for the key material, which remains unavailable to the mobile user.

## Description

### Field of the Invention

The invention describes a mechanism to avoid the disclosure to a client of secure data shared between a secure element and a secure server, in a specific context.

### Prior Art

Authentication and Key Agreement (AKA) protocols are widely used in wired and wireless environments to provide key material and proof of the identity between two connected entities. A typical example is a Wireless subscriber accessing a Cellular Network who is authenticated towards an authentication server in the network.

Different entities or devices are involved in an AKA procedure.
- A client, who is wishing to authenticate himself to the network (e.g. a mobile phone).
- An Authentication server (AS) who authenticates the client and eventually authenticates himself towards the client (in case of mutual authentication)

Both AS and client are able to use keys derived in the AKA protocol. (e.g. for implementing a secure data transfer).

Further, both the AS and the client may use a shared secret (K) with at least one authentication and key agreement algorithm (AKAAlg). The secret K is kept in a secure element (SE), which is accessible by the client, and in a secure server (SS), which is accessible, by the AS.

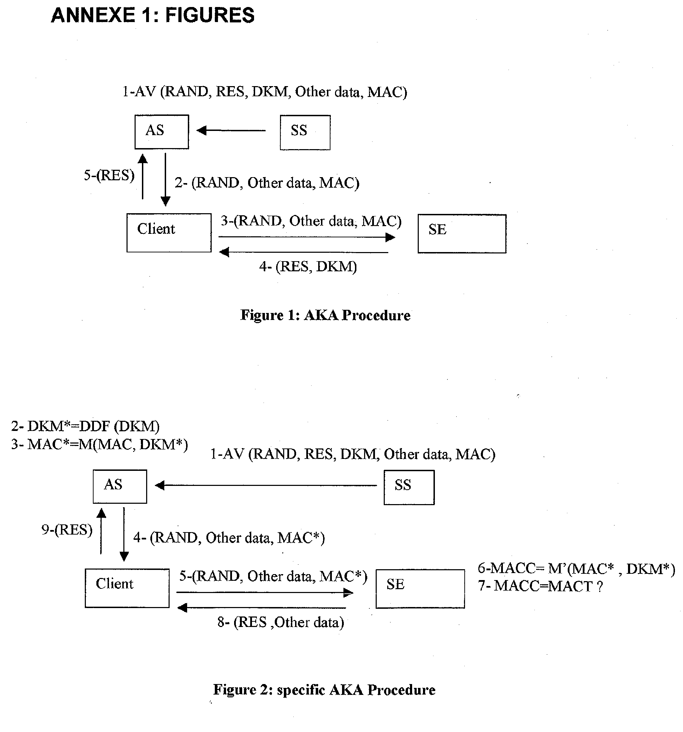

The procedure for performing an AKA procedure is as follows (see figure 1):

Typically, the SS chooses a randomize array (RAND). Using RAND with AKAAlg and K, SS produces an authentication vector (AV). AV is composed at least of the following components: the initial RAND, a result value (RES), some derived key material (DKM) and a message authentication code (MAC). AV is then delivered to AS. The AS sends RAND, MAC values and eventually other data to the client. The client sends them to the SE. SE runs AKA algorithm using the stored K and the given parameters (at least RAND, MAC). SE computes a MACT from K, RAND eventually other data sent from the client. The SE then tests the MAC (is MAC=MACT ?) in order to perform some integrity check and eventually an AS authentication procedure in case that additional server authentication data is delivered. Then SE computes RES and DKM and sends them to the client. The client sends RES to the AS in order to be authenticated towards the server, and uses DKM to perform any further security operation towards the AS.

An example of this basic authentication schema is UMTS AKA as defined in 3GPP TS 33.102

The explained model is well adapted to provide secure authentication and sharing of key material between both the client and the AS.

However, in some specific circumstances, it is needed that the AKAAlg is processed in a different way within the SE. For instance, under some specific circumstances, it is required that DKM or part of DKM is kept inside the SE instead of being delivered to the client.

In these specific cases, a basic requirement for lots of situations is that the client could not retrieve DKM using the standard AKA or any other procedure.

### The Invention

The aim of the invention is to provide a solution to avoid the disclosure of DKM to the client by modifying the parameters received by the client with the basis of the standard AKA procedure.

According to the invention, the AS is provided with a standard AV from the SS. When an AKA procedure is requested by the client or by the AS, and when a specific AKA procedure is chosen by AS (in which DKM or part of it should be kept secret inside the SE), the AS proceeds as follows (see figure 2):
- Compute DKM* = DDF[DKM] (where DDF is a DKM* derivation function applied to DKM value). For instance, DDF takes the first 64 bits of DKM;
- Take MAC value from AV;
- Compute as MAC*= M(MAC, DKM*) (where M is a reversible function e.g. MAC*= MAC XOR DKM*);
- Send RAND, MAC* and eventually other values to the client.

The client sends RAND and MAC* (and possibly other values) to the SE.

An additional AKAAlg in the SE is implemented in the following way:

The SE computes DKM and MACT.

Then from DKM, the SE computes DKM* following the same function DDF used by the AS(DDF function is known beforehand by both the SE and AS)

The SE performs MACC= M'(MAC*,DKM*) (where M' is the inverse function of M used by AS for instance MACC= MAC* XOR DKM*). The reversible function M' is known beforehand by both the SE and AS.

The result of this computation, MACC is then compared with MACT. If the MAC verification fails (MACT ≠MACC), the SE informs the client that the MAC verification has failed. If the MAC verification succeeds, the SE sends RES to the client and keeps the other data (DKM,etc...) or a part of it.

### Extensions:

### Extension 1:

The same procedure may be applied modifying any value used in the MAC computation but not in the DKM computation, instead of the MAC itself.

### Extension 2:

One implementation of the indication of the specific context to the secure element could be the detection of the modification of the MAC.

### Extension 3:

The same procedure may be applied for indicating to the client that a specific usage of DKM needs to be enforced. In this case, even if DKM exits the SE, the client may perform the described MAC procedures after the AKAAlg has taken place in the SE.

## Claims

1. Method for securing an authentication and key agreement (AKA) procedure comprising the following steps:
a. Sending the standard Authentication Vectors (AV) from the Secure Server(SS) to an Authentication Server (AS);
b. Modifying in the Authentication Server (AS) the MAC and/or any other parameter not used as input of the DKM computation, sent by the Secure Server (SE) to the AS (Authentication Server);
c. Sending from the Authentication Server (AS) to the Secure Element (SE), through the client said modified data;
d. Detecting, in the Secure Element (SE) the modification of the said data.

2. Method for securing an authentication and key agreement (AKA) procedure between a Secure Server (SS) and a client using a Secure Element (SE) through an Authentication Server (AS) consisting in modifying the MAC and/or any other parameter not used as input of the DKM computation, sent by the Secure Server (SS) to the Authentication Server(AS) and in transmitting said modified data to the Secure Element (SE).

3. Method according to claim 2, wherein the MAC is modified by the AS by applying a reversible function (M).

4. Method according to claim 3, wherein the MAC is modified by applying a derivation function (DDF) to a Derived Key Material parameter (DKM), sent by the Secure Server (SS) to the Authentication Server (AS).

5. Method of securing an authentication and key agreement (AKA) procedure between a Secure Server (SS) and a client using a Secure Element (SE) through an Authentication Server (AS) consisting in detecting the modification of the MAC and/or any other parameter not used as input of the DKM computation, sent to the Secure Element with regards to the MAC and/or any other parameter not used as input of the DKM computation, sent by the Secure Server to the Authentication Server (AS).

6. Method according to claim 5, consisting in sending to the Authentication Server through the client, the standard AKA output excepted DKM, in case of matching MAC and successful authentication.

7. Method according to one of the claims 5 or 6, wherein the SE detects that a specific procedure is requested by the AS by detecting said specific MAC modification.

8. A tamper resistant module, in particular a smart card, including program code instructions to execute the method defined in one of the claims 5 to 7.

9. Computer program including program code instructions to execute the MAC modification method defined in one of the claims 1 to 7.
